# FASCICULE DE BREVET EUROPEEN

(11) **EP 2 061 977 B1**
(45) Date de publication et mention de la délivrance du brevet: **30.10.2019**
(21) Numéro de dépôt: 07823826.8
(22) Date de dépôt: 13.09.2007
(51) Int. Cl.: F16F 7/02, F16F 7/04

(54) **DISPOSITIF À FRICTION POUR LE CONTRÔLE D'EFFORT, ET UN AMORTISSEUR À FRICTION COMPRENANT UN TEL DISPOSITIF**
REIBUNGSVORRICHTUNG ZUR KRAFTSTEUERUNG SOWIE REIBUNGSDÄMPFER MIT DERARTIGER VORRICHTUNG
FRICTION DEVICE FOR CONTROLLING FORCE, AND A FRICTION DAMPER COMPRISING SUCH A DEVICE

(30) Priorité: 14.09.2006 FR 0653744
(43) Date de publication de la demande: 27.05.2009
(73) Titulaire: Safran Landing Systems, 78140 Vélizy-Villacoublay (FR)
(72) Inventeur: VALEMBOIS, Guy, F-31400 Toulouse (FR)
(74) Mandataire: Rhein, Alain
(86) Numéro de dépôt international: PCT/FR2007/051931
(87) Numéro de publication internationale: WO 2008/031998

(56) Documents cités:
- BE-A- 377 729
- GB-A- 212 522
- GB-A- 260 740
- US-A- 1 654 763

## Description

La présente invention a pour objet un dispositif à friction pour le contrôle d'effort, et un amortisseur à friction comprenant un tel dispositif.

On connaît déjà des dispositifs à friction pour le contrôle d'effort, utilisé notamment dans des dispositifs amortisseurs à friction, dont le principe général consiste à utiliser deux surfaces de friction à déplacement relatif pressées l'une contre l'autre, en sorte de transformer l'effort normal auxdites surfaces en un effort de friction, apte à créer un effort amortisseur.

De manière générale, ces dispositifs d'amortisseur comprennent au moins deux organes dont l'un est mobile en déplacement relatif par rapport l'autre sous l'action d'un effort extérieur, ledit déplacement étant susceptible de provoquer le déplacement relatif de deux surfaces de friction soumises à des efforts de pressage, en sorte de transformer ledit effort extérieur en un effort de friction et ainsi amortir le déplacement dudit organe mobile.

Les dispositifs à friction sont utilisés dans différents domaines, aussi bien, non limitativement, dans celui des transports aérien, routier et ferroviaire pour des systèmes d'amortissement, de freinage, d'embrayage ou de transmission, de limitation de couple, que dans celui de l'armement pour amortir le recul des armes à feu.

Cependant, le contrôle de l'effort d'un dispositif à friction est réalisé au travers de l'effort normal de pression, en sorte qu'il est directement dépendant du coefficient de frottement des matériaux dont sont constituées les surfaces de friction, ce qui entraîne des incertitudes sur l'effort restitué ou, sur sa répétitivité et stabilité dans le temps.

On connaît également par le document GB 260 740 un amortisseur de chocs pour véhicules, destiné à être utilisé en complément de ressorts amortisseurs, et qui comprend des éléments de friction tels que des disques, mobiles en déplacement l'un par rapport à l'autre sous l'effet d'un déplacement, associés à des ressorts dont l'action et la poussée sont contrôlées pour mettre en pression les éléments de friction, pression qui diffère selon la direction dudit mouvement, à savoir que cette pression est appliquée dans un sens, tandis qu'elle est supprimer dans l'autre sens. A cet effet, une partie des éléments de friction est vissée sur un élément coaxial fileté, et la poussée des ressorts est appliquée axialement du côté opposé à celui comportant l'autre partie des éléments de friction, en sorte que le pivotement dans le sens du vissage conjugué à la poussée, entraînent l'augmentation de la friction, tandis que le pivotement dans l'autre sens tend à écarter les éléments de friction et à supprimer le contact entre ceux-ci.

Un tel amortisseur de chocs a un fonctionnement de type "tout ou rien", et ne permet pas un contrôle de l'effort. Il est prévu pour assister un système d'amortisseur, c'est-à-dire qu'il oscille au gré du fonctionnement normal du système amortisseur, et se bloque lorsque l'oscillation atteint une certaine amplitude dans le sens de la compression du ressort dudit système amortisseur. Il ne permet donc pas de calibrer l'effort amortisseur dans un seul sens, puisqu'il y a nécessité, pour supprimer le blocage, d'un changement de sens de l'effort.

La présente invention a pour but de pallier les divers inconvénients précités, en proposant un dispositif à friction pour le contrôle d'effort, permettant que le niveau d'effort restitué soit quasiment indépendant du coefficient de frottement des matériaux dont sont constituées les surfaces de friction, et qui par conséquent autorise un contrôle dudit effort restitué.

Le dispositif à friction selon l'invention est du type comprenant au moins deux organes dont l'un est mobile, ou potentiellement mobile, en déplacement relatif par rapport à l'autre sous l'action d'une sollicitation extérieure, et où ledit déplacement relatif est susceptible de provoquer le déplacement relatif de deux surfaces de friction soumises à des efforts de pressage, en sorte de transformer ladite sollicitation extérieure en un effort de friction et ainsi contrôler le déplacement dudit organe mobile ou potentiellement mobile, et il se caractérise en ce que lesdits efforts de pressage sont produits par des moyens de précontrainte, et en ce que lesdits organes sont conçus aptes à agir sur les effets des moyens de précontrainte en sorte d'utiliser l'effet résultant du déplacement relatif dudit organe mobile, ou potentiellement mobile, pour réduire lesdits efforts de pressage, et en ce que ledit dispositif de friction est conçu de manière que le déplacement de l'organe mobile dans la direction de ladite sollicitation extérieure (P ; T) génère un contrôle dudit déplacement, tandis que le déplacement dans le sens inverse conduit au blocage du mouvement.

Un tel dispositif à friction permet, à partir d'une précontrainte d'intensité connue, d'obtenir de manière précise le contrôle d'un effort, indépendamment des coefficients de frottement des surfaces en friction.

Selon un premier mode de réalisation du dispositif à friction selon l'invention, les organes sont mobiles, ou potentiellement mobiles, l'un par rapport à l'autre dans un mouvement de rotation et sont associés à des moyens de transformation de mouvement de rotation en mouvement rectiligne, tandis qu'un élément annulaire est intercalé entre lesdits organes, et que ledit élément annulaire est:
- apte à être bloqué en rotation sur l'un desdits organes, au moins dans un sens de rotation, en sorte de générer un couple friction entre ledit élément annulaire et l'autre organe,
- associé à des moyens élastiques de précontrainte, aptes à accroître ledit couple de friction,
- et associé à des moyens aptes, sous l'effet d'une part de la rotation de l'organe mobile générée par l'effort extérieur et d'autre part de l'effort résistant issu de la friction, à réduire les effets desdits moyens élastiques de précontrainte.

Selon une caractéristique additionnelle du premier mode de réalisation du dispositif à friction selon l'invention, l'élément annulaire est constitué d'un assemblage coaxial de deux anneaux présentant chacun une surface de friction, et conformés en sorte que la modification de la distance qui les sépare, obtenue sous l'action des moyens élastiques de précontrainte, agisse sur le rapprochement des surfaces de friction desdits anneaux de celles de l'organe mobile.

Selon une autre caractéristique additionnelle du premier mode de réalisation du dispositif à friction selon l'invention, la surface de friction de chacun des anneaux est coaxiale tronconique, tandis que la surface de friction en regard de l'organe mobile l'est également et de même angle.

Selon une autre caractéristique additionnelle du premier mode de réalisation du dispositif à friction selon l'invention, il comporte une bague bloquée en rotation, au moins dans un sens de rotation, sur l'organe immobilisé, et à laquelle l'élément annulaire est solidarisé en rotation au travers de billes logées dans des cavités régulièrement réparties périphériquement et constituées chacune de la concordance de deux logements, l'un pratiqué dans ladite bague et l'autre dans ledit élément annulaire pour moitié dans chacun des anneaux qui le constituent, le logement pratiqué dans ledit élément annulaire étant conformé sous forme de rampes en sorte que, lors d'un mouvement de rotation relatif dudit élément annulaire par rapport à ladite bague, lesdites billes prennent appui contre lesdites rampes en sorte de provoquer l'écartement desdits anneaux.

Selon une autre caractéristique additionnelle du premier mode de réalisation du dispositif à friction selon l'invention, les anneaux présentent chacun une paroi extérieure tronconique en sorte de donner à l'élément annulaire, par le rapprochement desdits anneaux, une forme sensiblement de diabolo, tandis que l'organe mobile se présente sous la forme d'une poulie montée sur ledit élément annulaire et dont la paroi interne, qui constitue une surface de friction destinée à coopérer la paroi extérieure dudit élément annulaire qui constitue l'autre surface de friction, est de forme complémentaire et comporte à cet effet une arête médiane périphérique qui la sépare en deux parties chacune de forme tronconique, et orientée de manière divergente, et en ce que sur ladite poulie est fixé et enroulé un moyen apte à être soumis à l'effort extérieur.

Selon une autre caractéristique additionnelle du premier mode de réalisation du dispositif à friction selon l'invention, l'élément annulaire est lié à l'un des organes par l'intermédiaire d'une roue libre.

Selon un second mode de réalisation du dispositif à friction selon l'invention, les organes sont mobiles l'un par rapport à l'autre dans un mouvement de translation rectiligne, et comportent des moyens de transformation dudit mouvement rectiligne en deux mouvements de rotation coaxiaux audit mouvement de translation et de sens opposés, en sorte d'entraîner en rotations inverses des surfaces de friction, mises en contact au travers de moyens de pression.

Selon une caractéristique additionnelle du second mode de réalisation du dispositif à friction selon l'invention, l'un des organes consiste en une tige munie d'un filetage à plusieurs filets à gauche, et d'un filetage à plusieurs filets à droite, sur laquelle sont vissés deux écrous, l'un fileté à gauche et l'autre fileté à droite, chacun d'eux associé à au moins une surface de friction.

Selon une autre caractéristique additionnelle du second mode de réalisation du dispositif à friction selon l'invention, il comporte un empilement de disques de forme annulaire et enfilés sur la tige, chacun lié en alternance en rotation à l'un des écrous.

Selon une autre caractéristique additionnelle du second mode de réalisation du dispositif à friction selon l'invention, les deux écrous et leurs disques sont logés dans un corps qui renferme les moyens de pression, lesquels consistent en des moyens élastiques aptes à exercer un effort de pressage sur l'empilement de disques.

Selon une caractéristique additionnelle du dispositif à friction selon l'invention, quel que soit le mode de réalisation envisagé, les moyens de précontrainte consistent en des moyens de pressage d'intensité réglable.

Selon une autre caractéristique additionnelle du dispositif à friction selon l'invention, les moyens de précontrainte consistent en des actionneurs hydrauliques, pneumatiques ou électriques.

Les avantages et les caractéristiques du dispositif à friction selon l'invention, ressortiront plus clairement de la description qui suit et qui se rapporte au dessin annexé, lequel en représente plusieurs modes de réalisation non limitatifs.

Dans le dessin annexé :
- la figure 1 représente une vue schématique illustrant le principe du dispositif à friction selon l'invention.
- la figure 2 représente une vue schématique en perspective d'un premier mode de réalisation d'un dispositif selon l'invention.
- la figure 3 représente une vue schématique en coupe médiane du même dispositif.
- la figure 4 représente une vue schématique en perspective en éclaté et avec écorché, d'une partie du même dispositif.
- la figure 5 représente une vue schématique partielle en perspective, en éclaté et avec écorché d'un second mode de réalisation du dispositif selon l'invention.
- la figure 6 représente une vue schématique en coupe médiane du même dispositif.

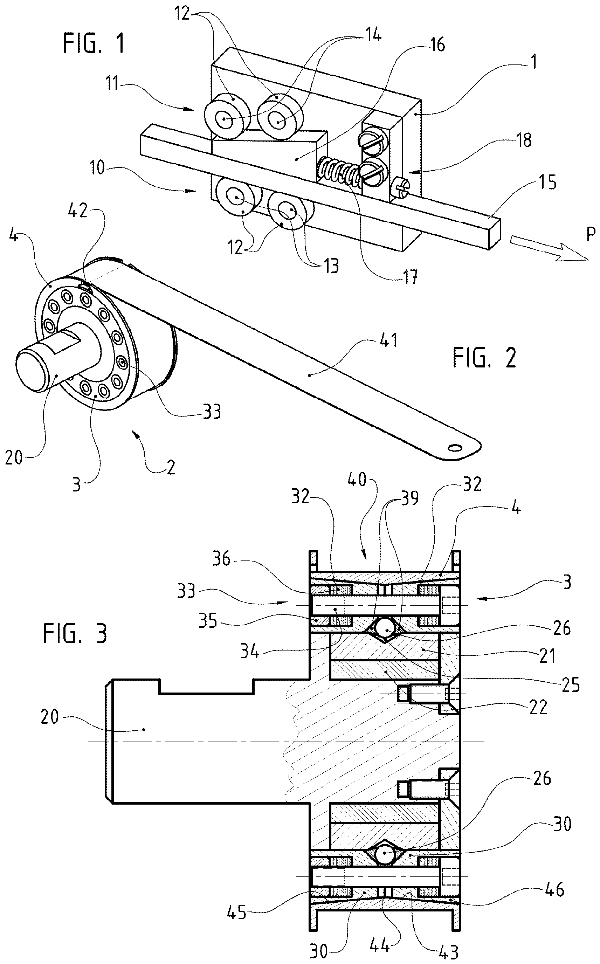

En référence à la figure 1, on peut voir un montage permettant d'illustrer le principe du dispositif à friction selon l'invention.

Ce montage comprend une platine 1 qui porte deux paires 10 et 11 de galets 12 montés fous sur des axes, respectivement 13 et 14, parallèles, perpendiculaires à un plan de la platine 1. L'alignement des axes 13 des galets 12 de la paire 10 n'est pas parallèle à l'alignement des axes 14 des galets 12 de la paire 11, ils forment en effet un certain angle.

Le montage comporte également d'une part une tige rectiligne 15, posée sur les galets 12 de la paire 10, et d'autre part un coin 16 intercalé entre la tige 15 et les galets 12 de la paire 11, le coin 16 étant conformé pour que ces faces en contact avec les galets 12 fassent le même angle que celui formé par les alignements précités.

Par ailleurs, le coin 16 est repoussé, parallèlement à la tige 15, contre les galets 12 de la paire 11, au moyen d'un ressort 17, coopérant avec un système 18 de réglage de sa tension.

Le ressort 17 exerce un effort sur le coin 16, lequel effort se transforme en effort normal entre le coin 16 et la tige 15.

Dans le cas d'un mouvement relatif entre la tige 15 et le coin 16, il se crée un effort tangentiel entre les surfaces de glissement, et lors d'un déplacement relatif de la tige 15 par rapport à la platine 1, le système est bloqué dans le sens de la poussée du ressort 17, tandis qu'il est fonctionnel dans le sens inverse P.

On comprendra que le déplacement de la tige 15 dans le sens de P, dépend très peu, et quasiment pas, du coefficient de frottement des matériaux dont sont faits la tige 15 et le coin 16, mais que par contre il dépend de l'effort de précontrainte exercé par le ressort 17, effort qui, puisqu'il est réglable, et également fonction de l'effort amortisseur, permet un réglage de l'effort restitué.

Ce dispositif à friction n'est pas de type tout ou rien, dans un sens de déplacement, inverse de P, il y a blocage, tandis que dans l'autre sens il y a contrôle du déplacement.

En référence maintenant aux figures 2, 3 et 4, on peut voir un premier mode de réalisation 2 du dispositif à friction selon l'invention.

En particulier sur la figure 3, on peut voir que ce dispositif à friction 2 comprend un arbre 20, sur lequel est montée une bague 21, elle-même surmontée d'un élément annulaire 3, lui-même surmonté d'une poulie 4.

On notera que la bague 21 est montée sur l'arbre par l'intermédiaire d'une roue libre 22, n'autorisant qu'un seul sens de rotation de la bague 21 sur l'arbre 20.

En référence également à la figure 2, on peut voir que la poulie 4 comporte extérieurement une gorge 40 dans laquelle est enroulé un clinquant 41, qui est accroché fixement par une extrémité à la poulie 4 en un point d'accrochage 42.

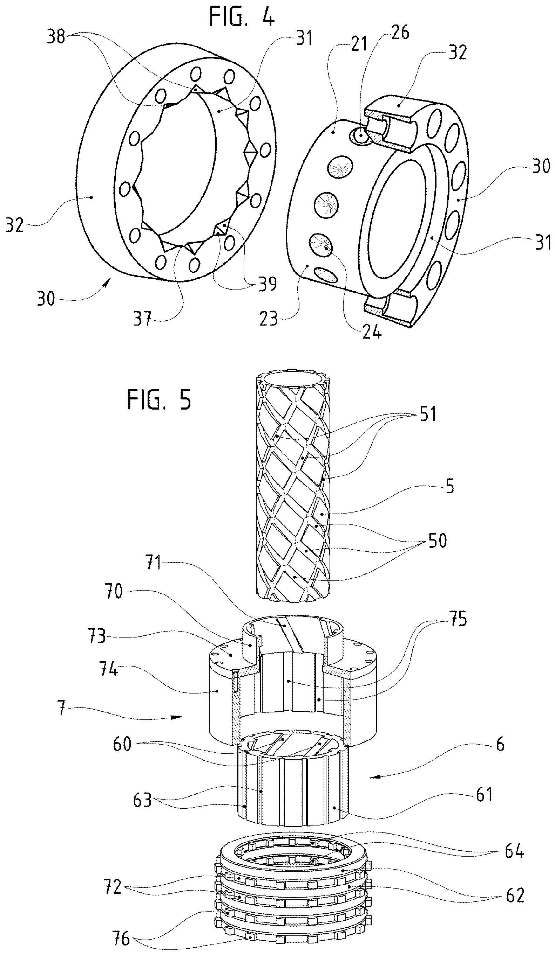

Comme on peut le voir de manière plus précise sur la figure 4, l'élément annulaire 3 consiste en un assemblage coaxial de deux anneaux 30 présentant intérieurement une paroi 31 de forme cylindrique adaptée à la paroi extérieure 23 de la bague 21, et extérieurement une paroi 32 de forme tronconique, de sorte que l'élément annulaire 3 présente la forme d'un diabolo.

Par ailleurs, sur la figure 3, on peut constater que la poulie 4 comporte une paroi interne 43 qui présente une forme particulière, à savoir biconique. En effet, cette paroi interne 43 comporte une arête médiane périphérique 44 qui la sépare en deux parties 45 et 46 chacune de forme tronconique, et orientée de manière divergente, c'est-à-dire que son bord extérieur est d'un diamètre supérieur à celui de l'arête 44.

Les pentes des parties 45 et 46 sont bien entendu de même angle que celui des pentes des parois 32 des anneaux 30, en sorte d'obtenir une parfaite adaptation de la poulie 4 sur l'élément annulaire.

Le rapprochement des deux anneaux 30 à l'intérieur de la poulie 4, est réalisé par l'intermédiaire d'une multiplicité d'éléments de maintien 33 répartis périphériquement, constitués chacun d'une vis 34 qui traverse les deux anneaux 30 et d'un écrou 35, qui compriment contre ceux-ci des moyens élastique 36, en l'occurrence des superpositions de rondelles élastiques, de type Belleville par exemple.

Les deux anneaux 30 sont ainsi comprimés chacun par l'intermédiaire de leur paroi 32 contre une partie 45 ou 46, et de manière élastique du fait des moyens élastiques 36.

Ainsi il est créé entre l'élément annulaire 3 et la poulie 4, un couple de friction dont la valeur varie selon la nature des moyens élastiques 36, selon le nombre d'éléments de maintien 33, et selon le couple de serrage des vis 34 et des écrous 35. Les éléments de maintien 33 constituent ainsi des moyens de précontrainte permettant de freiner un déplacement relatif en rotation de la poulie 4 sur l'élément annulaire 3, au travers d'une traction sur le clinquant 41.

Sur les figures 3 et 4, on peut voir que dans la paroi extérieure 23 de la bague 21, sont pratiqués des logements 24, régulièrement espacés, et répartis selon une ligne médiane, tandis que la paroi 31 de chacun des anneaux 30 présente sur son arête 37 du côté interne de l'élément annulaire 3, des échancrures 38, régulièrement espacées, de même écart angulaire que les logements 24, en sorte que lors du rapprochement des deux anneaux 30, deux échancrures 38 en regard forment un logement qui, en coopération avec les logements 24, forment une cavité 25, visible sur la figure 3, destinée à contenir une bille 26.

Les billes 26 constituent les seuls moyens de liaison entre la bague 21 et l'élément annulaire 3, les cavités 25 étant dimensionnées pour n'autoriser qu'un jeu fonctionnel des billes 26.

Si les logements 24 présentent une forme qui peut être quelconque, en l'occurrence en forme de calotte, les échancrures 38 présentent une forme particulière, à savoir qu'elles sont constituées de deux plans inclinés 39, en sorte que les logements obtenus par la rapprochement des anneaux 30 présentent une forme de pyramide.

Lors de la mise en rotation de l'élément annulaire 3, dans le sens inverse de celui autorisé par la roue libre 22, le contact des billes avec les plans inclinés 39 qui forment alors des rampes, tend à provoquer l'écartement des anneaux 30.

En utilisation, non limitativement, l'arbre 20 est fixe, le clinquant 41 est relié à l'objet en mouvement à amortir. Lors d'une traction sur le clinquant, la poulie 4 tourne sur l'élément annulaire 3, la rotation étant limitée par les frottements entre la paroi interne 43 et les parois 32.

Si le couple de frottement est trop important il se produit une adhérence de la poulie 4 sur l'élément annulaire 3, avec pour conséquence une rotation relative de l'élément annulaire 3 sur la bague 21, et donc, du fait de la coopération des billes 26 avec les pans inclinés 39, un écartement des anneaux 30 et une diminution du couple de frottement.

Le couple de frottement est donc déterminé par la rivalité des deux fonctions antagonistes exercées pour l'une par le serrage des anneaux 30 sur la poulie 4 par l'intermédiaire des éléments de maintien 33 et de l'action des moyens élastiques 36, et pour l'autre par le desserrement des anneaux 30 induit par le mouvement rotation relatif de l'élément annulaire 3 sur la bague 21 et l'action des billes 26 sur les plans inclinés 39.

Le mouvement de rotation de la poulie 4 sur l'élément annulaire, à savoir l'effort amortisseur, dépend très peu du coefficient de frottement des matériaux dont ils sont faits, il dépend essentiellement des éléments de maintien 33 qui exercent un effort presseur en association avec les moyens élastiques 36 qui exercent un effort de précontrainte, tandis que l'effort amortisseur agit, par l'intermédiaire des billes 26 et des plans inclinés 39, sur les éléments de maintien 33 et les moyens élastiques 39 en sorte de réduire l'effort presseur.

On notera qu'il est prévu que le clinquant 41 soit préformé à un diamètre inférieur à celui de la poulie 4 pour lui donner une fonction ressort, en sorte que lors du relâchement de la traction, il reprenne sa forme initiale et s'enroule sur la poulie, ce qui est réalisable du fait de l'interposition de la roue libre 22, entre la bague 21 et l'arbre 20.

Ce mode de réalisation du dispositif à friction selon l'invention peut par exemple être utilisé comme dispositif amortisseur dans un système d'arme pour limiter les effets du recul d'un canon d'arme. Le recul du canon entraîne le clinquant 41 en translation, ce qui provoque la rotation de la poulie 4. A l'arrêt de la sollicitation externe le clinquant 41 reprend sa forme et permet le retour du canon dans sa position initiale.

Des nombreuses variantes sont bien entendu réalisables, ainsi les surfaces de friction coniques peuvent être remplacées par des surfaces planes simples ou de type multiples comme dans les freins multi disques, en fonction de la géométrie globale de l'amortisseur à concevoir.

Le système d'écartement à billes peut lui aussi être remplacé par tout autre système permettant de réaliser la même fonction, à savoir une rampe hélicoïdale ou une came.

Tandis que le système clinquant et poulie peut être remplacé par un système poulie et courroie crantée ou non, un système poulie et câble ou un système pignon crémaillère.

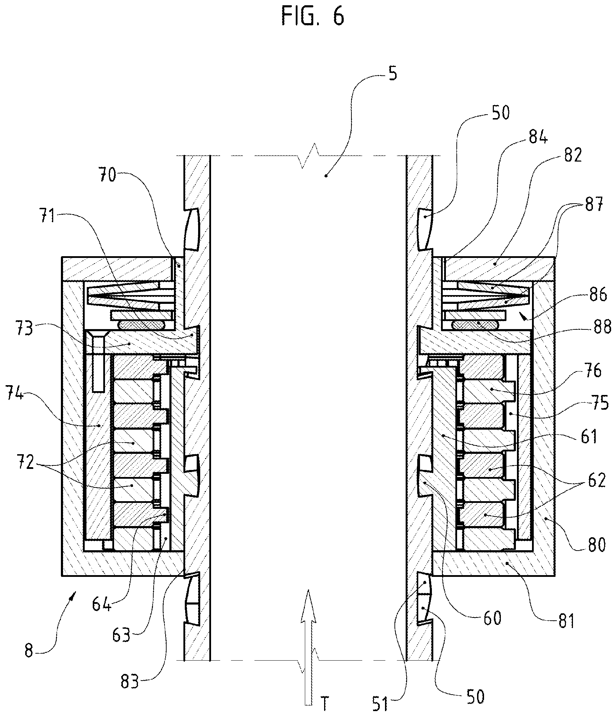

En référence maintenant aux figures 5 et 6, on peut voir un autre mode de réalisation du dispositif à friction selon l'invention.

Il comprend une tige 5, destinée à se déplacer en translation axiale sous l'effet d'une poussée ou d'une traction, et dont la paroi extérieure est munie d'une part d'un filetage à plusieurs filets à gauche 50, et d'autre part d'un filetage à plusieurs filets à droite 51. Ainsi les filets 50 et 51 se croisent, on notera qu'ils ne sont pas obligatoirement de même pas.

Le dispositif comprend également d'une part un écrou 6 qui présente un filetage à gauche 60 conformé pour coopérer avec les filets à gauche 50, et d'autre part un écrou 7 qui présente un filetage à droite 71 conformé pour coopérer avec les filets à droite 51.

On comprendra que le déplacement relatif en translation des deux écrous 6 et 7 dans le même sens le long de la tige 5, provoque des rotations opposées des deux écrous 6 et 7.

Le dispositif comprend également une série de disques de friction 62 bloqués en rotation sur l'écrou 6, ainsi qu'une série de disques 72 bloqués en rotation sur l'écrou 7, les disques 62 et 72 étant empilés en alternance en une seule pile.

A cet effet l'écrou 6 se présente sous la forme d'un manchon tubulaire 61 qui comporte intérieurement les filets à gauche 60, et extérieurement des gorges longitudinales 63 disposées selon des génératrices, tandis que les disques 62 se présentent sous la forme d'anneaux comportant sur leur pourtour intérieur des cannelures 64 destinées à coopérer avec les gorges 63 en sorte d'obtenir un blocage en rotation des disques 62 sur le manchon 61.

De la même manière, l'écrou 7 se présente sous la forme d'un manchon tubulaire 70 muni intérieurement des filets à droite 71, et extérieurement d'une collerette 73 portant jupe extérieure 74 en forme de manchon, qui présente sur sa paroi intérieure des gorges longitudinale 75 disposées selon des génératrices, tandis que les disques 72 présente extérieurement des cannelures 76 destinées à coopérer avec les gorges 75 en sorte d'obtenir un blocage en rotation des disques 72 sur la jupe 74, et donc, par l'intermédiaire de la collerette 73, sur le manchon 70.

On comprendra que le déplacement relatif en translation des deux écrous 6 et 7 dans le même sens le long de la tige 5, provoque des rotations opposées des disques 62 et 72 alors qu'ils sont en contact les uns avec les autres.

En référence maintenant plus particulièrement à la figure 6, on peut voir que l'ensemble constitué par les deux écrous 6 et 7 et leurs disques, respectivement 62 et 72, est enfermé dans un corps 8 formant une cage.

Ce corps 8 comprend d'une part un manchon 80 de forme tubulaire, enveloppant extérieurement les deux écrous 6 et 7, et qui est fermé à chacune de ses extrémités par une pièce annulaire 81 et 82.

La pièce annulaire 81 présente une ouverture 83 d'un diamètre compris entre celui extérieur de la tige 5 et celui extérieur du manchon 61, en sorte pouvoir venir en butée sur ce dernier.

La pièce annulaire 82 présente une ouverture interne 84 d'un diamètre supérieur à celui extérieur du manchon 70, en sorte d'autoriser un déplacement axial de ce manchon 70 dans cette ouverture 84.

Enfin, le manchon 80 est conformé pour loger dans un espace annulaire 85 ménager entre la collerette 73 et la pièce annulaire 82, des moyens élastiques 86 aptes à éloigner l'une de l'autre la collerette 73 et la pièce annulaire 82, et donc à presser sur les extrémités de l'empilement de disques 62 et 72. Ces moyens élastiques 86 consistent en l'occurrence en une empilement de rondelles élastiques 87 de type Belleville, associé à une butée 88, de type roulement à aiguilles, intercalée entre l'empilement et la collerette 73 en sorte d'autoriser la rotation de l'écrou 7 par rapport au corps 8.

Selon un mode de fonctionnement, non limitatif, une sollicitation extérieure T appliquée à la tige 5, entraîne celle-ci en translation ce qui génère les rotations opposées des écrous 6 et 7, provoquant le glissement des disques de friction 62 et 72 les uns sur les autres. Un couple de frottement apparaît entre chaque surface de friction du fait de l'effort presseur exercé par les moyens élastiques 86. Ce couple de frottement se transforme par les deux systèmes vis-écrou en deux efforts axiaux de freinage sur la tige 5 pour créer un effort amortisseur.

Pour rendre le système réversible, il convient de monter l'un des écrous, de préférence l'écrou 7, en série avec une roue libre, non représentée, en sorte de permettre le mouvement retour de la tige 5.

Par ailleurs le corps 8 étant prévu solidaire de l'objet à amortir, ou inversement, la translation de la tige 5 tend à comprimer les moyens élastiques, en sorte que l'effort amortisseur tend à réduire la précontrainte et donc l'effort de friction, ce qui permet d'obtenir une régulation de cet effort de friction en fonction de l'effort amortisseur.

On notera que les moyens élastiques 87 peuvent être réalisés de différentes manières, ils peuvent ainsi consister en des actionneurs pneumatiques, hydrauliques ou électriques, des vérins par exemple, ce qui permet un réglage supplémentaire, éventuellement en temps réel.

Quel que soit le mode de réalisation du dispositif à friction selon l'invention, il a été calculé que de faire varier fortement le coefficient de frottement ne faisait varier qu'insensiblement l'effort restitué.

L'application préférée du dispositif à friction selon l'invention consiste en un dispositif amortisseur à friction, réalisé selon l'un ou l'autre mode de réalisation.

Le dispositif à friction selon l'invention peut cependant trouver de nombreuses autres applications, comme, non limitativement, dans le domaine du freinage, de la transmission, de l'asservissement aussi bien de freinage que d'embrayage.

## Revendications

1. Dispositif à friction comprenant au moins deux organes (1, 15 ; 20, 4 ; 5, 8) dont l'un est mobile, ou potentiellement mobile, en déplacement relatif par rapport à l'autre sous l'action d'une sollicitation extérieure (P ; T), et où ledit déplacement relatif est susceptible de provoquer le déplacement relatif de deux surfaces de friction soumises à des efforts de pressage, en sorte de transformer ladite sollicitation extérieure en un effort de friction et ainsi contrôler le déplacement dudit organe mobile ou potentiellement mobile, et où lesdits efforts de pressage sont produits par des moyens de précontrainte (17 ; 33 ; 86), et **caractérisé en ce que** lesdits organes (1, 15 ; 20, 4 ; 5, 8) sont conçus aptes à agir sur les effets des moyens de précontrainte (17 ; 36 ; 86) en sorte d'utiliser l'effet résultant du déplacement relatif dudit organe mobile, ou potentiellement mobile, pour réduire lesdits efforts de pressage; et **en ce que** ledit dispositif de friction est conçu de manière que le déplacement de l'organe mobile dans la direction de ladite sollicitation extérieure (P ; T) génère un contrôle dudit déplacement, tandis que le déplacement dans le sens inverse conduit au blocage du mouvement.

2. Dispositif à friction selon la revendication 1, **caractérisé en ce que** les moyens de précontrainte (17 ; 36 ; 86) consistent en des moyens de pressage d'intensité réglable.

3. Dispositif à friction selon la revendication 1 ou la revendication 2, **caractérisé en ce que** les organes (20, 4) sont mobiles, ou potentiellement mobiles, l'un par rapport à l'autre dans un mouvement de rotation et sont associés à des moyens (41) de transformation de mouvement de rotation en mouvement rectiligne, tandis qu'un élément annulaire (3) est intercalé entre lesdits organes (20, 4), et que ledit élément annulaire est:
- apte à être bloqué en rotation sur l'un (20) desdits organes, au moins dans un sens de rotation, en sorte de générer un couple friction entre ledit élément annulaire et l'autre organe (4),
- associé à des moyens élastiques de précontrainte (36), aptes à accroître ledit couple de friction,
- et associé à des moyens (25 , 26, 39) aptes, sous l'effet d'une part de la rotation de l'organe mobile (4) générée par l'effort extérieur et d'autre part de l'effort résistant issu de la friction, à réduire les effets desdits moyens élastiques de précontrainte (36).

4. Dispositif à friction selon la revendication 3, **caractérisé en ce que** l'élément annulaire (3) est constitué d'un assemblage coaxial de deux anneaux (30) présentant chacun une surface de friction (32), et conformés en sorte que la modification de la distance qui les sépare, obtenue sous l'action des moyens élastiques de précontrainte (36), agisse sur le rapprochement des surfaces de friction (32) desdits anneaux (30) de celles(45, 46) de l'organe mobile (4).

5. Dispositif à friction selon la revendication 4, **caractérisé en ce que** la surface (32) de friction de chacun des anneaux (30) est coaxiale tronconique, tandis que la surface de friction (45, 46) en regard de l'organe mobile (4) l'est également et de même angle.

6. Dispositif à friction selon l'une quelconque des revendications 4 à 5, **caractérisé en ce qu'**il comporte une bague (21) bloquée en rotation, au moins dans un sens de rotation, sur l'organe immobilisé (20), et à laquelle l'élément annulaire (3) est solidarisé en rotation au travers de billes (26) logées dans des cavités (25) régulièrement réparties périphériquement et constituées chacune de la concordance de deux logements, l'un (24) pratiqué dans ladite bague (21) et l'autre (38) dans ledit élément annulaire (3) pour moitié dans chacun des anneaux (30) qui le constituent, le logement pratiqué dans ledit élément annulaire (3) étant conformé sous forme de rampes (39) en sorte que, lors d'un mouvement de rotation relatif dudit élément annulaire (3) par rapport à ladite bague (21), lesdites billes (26) prennent appui contre lesdites rampes (39) en sorte de provoquer l'écartement desdits anneaux (30).

7. Dispositif à friction selon l'une quelconque des revendications 4 à 6, **caractérisé en ce que** l'élément annulaire (3) est lié à l'un des organes (20) par l'intermédiaire d'une roue libre (22).

8. Dispositif à friction selon l'une quelconque des revendications 5 à 7, **caractérisé en ce que** les anneaux (30) présentent chacun une paroi extérieure tronconique (32) en sorte de donner à l'élément annulaire (3), par le rapprochement desdits anneaux (30), une forme sensiblement de diabolo, tandis que l'organe mobile (4) se présente sous la forme d'une poulie montée sur ledit élément annulaire (3) et dont la paroi interne (45, 46), qui constitue une surface de friction destinée à coopérer la paroi extérieure (32) dudit élément annulaire (3) qui constitue l'autre surface de friction, est de forme complémentaire et comporte à cet effet une arête médiane périphérique (44) qui la sépare en deux parties chacune de forme tronconique, et orientée de manière divergente, et **en ce que** sur ladite poulie (4) est fixé et enroulé un moyen (41) apte à être soumis à l'effort extérieur.

9. Dispositif à friction selon la revendication 1 ou la revendication 2, **caractérisé en ce que** les organes (5, 8) sont mobiles l'un par rapport à l'autre dans un mouvement de translation rectiligne, et comportent des moyens (50, 51, 60, 71) de transformation dudit mouvement rectiligne en deux mouvements de rotation coaxiaux audit mouvement de translation et de sens opposés, en sorte d'entraîner en rotations inverses des surfaces de friction (62, 72), mises en contact au travers de moyens de pression (86).

10. Dispositif à friction selon la revendication 9, **caractérisé en ce que** l'un des organes consiste en une tige (5) munie d'un filetage à plusieurs filets à gauche (50), et d'un filetage à plusieurs filets à droite (51), sur laquelle sont vissés deux écrous (6, 7), l'un fileté à gauche et l'autre fileté à droite, chacun d'eux associé à au moins une surface de friction (62, 72).

11. Dispositif à friction selon la revendication 10, **caractérisé en ce qu'**il comporte un empilement de disques (62, 72) de forme annulaire et enfilés sur la tige (5), chacun lié en rotation en alternance à l'un des écrous (6, 7).

12. Dispositif à friction selon la revendication 11, **caractérisé en ce que** les deux écrous (6, 7) et leurs disques (62, 72) sont logés dans un corps (8) qui renferme les moyens de pression (86), lesquels consistent en des moyens élastiques (87) aptes à exercer un effort de pressage sur l'empilement de disques (62, 72).

13. Dispositif à friction selon l'une quelconque des revendications 10 à 12, **caractérisé en ce que** l'un des écrous (6, 7) est montée en série avec une roue libre.

14. Dispositif à friction selon l'une quelconque des revendications précédentes, **caractérisé en ce que** les moyens de précontrainte consistent en des actionneurs hydrauliques, pneumatiques ou électriques.

15. Amortisseur à friction, **caractérisé en ce qu'**il comporte un dispositif à friction selon l'une quelconque des revendications 1, 2, 3, 4, 5, 6, 7, 8 ou 14.

16. Amortisseur à friction, **caractérisé en ce qu'**il comporte un dispositif à friction selon l'une quelconque des revendications 1, 2, 9, 10, 11, 12, 13 ou 14.

## Patentansprüche

1. Reibungsvorrichtung, unfassend mindestens zwei Organe (1, 15 ; 20, 4 ; 5, 8), von denen eines unter der Wirkung einer äußeren Belastung (P ; T) beweglich oder potentiell beweglich in Verschiebung relativ zu dem anderen ist, und wobei die besagte relative Verschiebung geeignet ist, die relative Verschiebung von zwei Druckkräften ausgesetzten Reibungsflächen zu bewirken, um so die besagte äußere Belastung in eine Reibungskraft umzuwandeln und also die Verschiebung des besagten beweglichen oder potentiell beweglichen Organs zu steuern, und wobei die besagten Druckkräfte durch Vorspannmittel (17 ; 33 ; 86) erzeugt werden, und **dadurch gekennzeichnet sind, dass** die besagten Organe (1, 15 ; 20, 4 ; 5, 8) geeignet ausgelegt sind, so auf die Wirkungen der Vorspannmittel (17 ; 36 ; 86) einzuwirken, dass die sich aus der relativen Verschiebung des besagten beweglichen oder potentiell beweglichen Organs ergebende Wirkung genutzt wird, um die besagten Druckkräfte zu verringern; und dadurch, dass die besagte Reibungsvorrichtung so ausgelegt ist, dass die Verschiebung des beweglichen Organs in der Richtung der besagten äußeren Belastung (P ; T) eine Steuerung der besagten Verschiebung erzeugt, während die Verschiebung in entgegengesetzter Richtung zu der Sperrung der Bewegung führt.

2. Reibungsvorrichtung nach Anspruch 1, **dadurch gekennzeichnet, dass** die Vorspannmittel (17 ; 36 ; 86) aus Druckmitteln einstellbarer Intensität bestehen.

3. Reibungsvorrichtung nach Anspruch 1 oder Anspruch 2, **dadurch gekennzeichnet, dass** die Organe (20, 4) in einer Drehbewegung relativ zueinander beweglich oder potentiell beweglich sind und Mitteln (41) zum Umwandeln einer Drehbewegung in eine geradlinige Bewegung zugeordnet sind, während ein ringförmiges Element (3) zwischen den besagten Organen (20, 4) angeordnet ist, und dass das besagte ringförmige Element:
- geeignet ist, an einem (20) der besagten Organen zumindest in einer Drehrichtung drehgesperrt zu werden, um so ein Reibungsmoment zwischen dem genannten ringförmigen Element und dem anderen Organ (4) zu erzeugen,
- elastischen Vorspannmitteln (36) zugeordnet ist, die geeignet sind, das besagte Reibungsmoment zu erhöhen,
- und Mitteln (25, 26, 39) zugeordnet ist, die unter der Wirkung einerseits der durch die äußere Kraft erzeugte Drehung des beweglichen Organs (4) und andererseits der sich aus der Reibung ergebenden Widerstandskraft geeignet sind, die Wirkungen der besagten elastischen Vorspannmittel (36) zu verringern.

4. Reibungsvorrichtung nach Anspruch 3, **dadurch gekennzeichnet, dass** das ringförmige Element (3) aus einer koaxialen Zusammenfügung von zwei Ringen (30) besteht, die jeweils eine Reibfläche (32) aufweisen und so geformt sind, dass die unter der Wirkung der elastischen Vorspannmittel (36) erhaltene Änderung des Abstands, der sie trennt, auf die Annäherung der Reibungsflächen (32) der besagten Ringe (30) an diejenige (45, 46) des beweglichen Organs (4) wirkt.

5. Reibungsvorrichtung nach Anspruch 4, **dadurch gekennzeichnet, dass** die Reibfläche (32) jedes der Ringe (30) koaxial kegelstumpfförmig ist, während die dem beweglichen Organ (4) gegenüberliegende Reibfläche (45, 46) ebenfalls koaxial kegelstumpfförmig ist und im gleichen Winkel.

6. Reibungsvorrichtung nach irgendeinem der Ansprüche 4 bis 5, **dadurch gekennzeichnet, dass** sie einen Ring (21) umfasst, der mindestens in einer Drehrichtung am stillstehenden Element (20) drehgesperrt ist, und mit dem das ringförmige Element (3) durch Kugeln (26) drehfest verbunden ist, die in Hohlräumen (25) untergebracht sind, die regelmäßig auf dem Umfang verteilt sind und jeweils aus der Übereinstimmung zweier Aussparungen bestehen, von denen eine (24) in dem besagten Ring (21) und die andere (38) in dem besagten ringförmigen Element (3) zur Hälfte in jedem der Ringe (30), die diese bilden, vorgesehen ist, wobei die in dem besagten ringförmigen Element (3) vorgesehene Aussparung als Rampen (39) geformt ist, sodass sich die besagten Kugeln (26) bei einer relativen Drehbewegung des besagten ringförmigen Elements (3) relativ zu dem besagten Ring (21) an den besagten Rampen (39) anlehnen, sodass die Auseinanderbewegung der besagten Ringe (30) bewirkt wird.

7. Reibungsvorrichtung nach irgendeinem der Ansprüche 4 bis 6, **dadurch gekennzeichnet, dass** das ringförmige Element (3) über ein Freilaufrad (22) mit einem der Organe (20) verbunden ist.

8. Reibungsvorrichtung nach irgendeinem der Ansprüche 5 bis 7, **dadurch gekennzeichnet, dass** die Ringe (30) jeweils eine kegelstumpfförmige Außenwand (32) aufweisen, sodass dem ringförmigen Element (3) durch die Annäherung der besagten Ringe (30) aneinander eine Form einer im wesentlichen Diabolo-Rolle verleiht wird, während das bewegliche Element (4) als eine auf dem besagten ringförmigen Element (3) gelagerte Riemenscheibe ausgestaltet ist, deren Innenwand (45, 46), die eine Reibfläche bildet, die dazu bestimmt ist, mit der Außenwand (32) des besagten ringförmigen Elements (3), die die andere Reibfläche bildet, zusammenzuwirken, eine ergänzende Form aufweist und zu diesem Zweck eine periphere Mittelkante (44) umfasst, die sie in zwei jeweils kegelstumpfförmige und divergent ausgerichtete Teile trennt, und dadurch, dass an der besagten Riemenscheibe (4) ein Mittel (41) befestigt und aufgewickelt ist, das geeignet ist, der äußeren Kraft ausgesetzt zu werden.

9. Reibungsvorrichtung nach Anspruch 1 oder Anspruch 2, **dadurch gekennzeichnet, dass** die Organe (5, 8) bei einer geradlinigen Translationsbewegung zueinander beweglich sind, und Mittel (50, 51, 60, 71) zum Umwandeln der besagten geradlinigen Bewegung in zwei Drehbewegungen, die koaxial zu der Translationsbewegung und in entgegengesetzten Richtungen sind, sodass über Druckmittel (86) in Kontakt gebrachte Reibflächen (62, 72) in entgegengesetzten Richtung in Drehung angetrieben werden.

10. Reibungsvorrichtung nach Anspruch 9, **dadurch gekennzeichnet, dass** eines der Organe aus einer Stange (5) besteht, die mit einem Gewinde mit mehreren linksgängigen Gewinden (50) und mit einem Gewinde mit mehreren rechtsgängigen Gewinden (51) versehen ist, auf der zwei Muttern aufgeschraubt sind (6, 7), von denen eine mit einem linksgängigen Gewinde und die andere mit einem rechtsgängigen Gewinde, wobei diese jeweils mindestens einer Reibfläche (62, 72) zugeordnet sind.

11. Reibungsvorrichtung nach Anspruch 10, **dadurch gekennzeichnet, dass** sie einen Stapel von ringförmigen Scheiben (62, 72) umfasst, die auf der Stange (5) aufgeschoben sind, wobei sie jeweils abwechselnd drehbar mit einer der Muttern (6, 7) verbunden sind.

12. Reibungsvorrichtung nach Anspruch 11, **dadurch gekennzeichnet, dass** die zwei Muttern (6, 7) und deren Scheiben (62, 72) in einem Körper (8) untergebracht sind, der die Druckmittel (86) enthält, die aus elastischen Mitteln (87) bestehen, die geeignet sind, eine Druckkraft auf den Scheibenstapel (62, 72) auszuüben.

13. Reibungsvorrichtung nach irgendeinem der Ansprüche 10 bis 12, **dadurch gekennzeichnet, dass** eine der Muttern (6, 7) mit einem Freilaufrad in Reihe gelagert ist.

14. Reibungsvorrichtung nach irgendeinem der vorhergehenden Ansprüche, **dadurch gekennzeichnet, dass** die Vorspannmittel aus hydraulischen, pneumatischen oder elektrischen Aktuatoren bestehen.

15. Reibungsdämpfer, **dadurch gekennzeichnet, dass** er eine Reibungsvorrichtung nach irgendeinem der Ansprüche 1, 2, 3, 4, 5, 6, 7, 8 oder 14 umfasst.

16. Reibungsdämpfer, **dadurch gekennzeichnet, dass** er eine Reibungsvorrichtung nach irgendeinem der Ansprüche 1, 2, 9, 10, 11, 12, 13 oder 14 umfasst.

## Claims

1. Friction device comprising at least two organs (1, 15 ; 20, 4 ; 5, 8), one of which is movable, or potentially movable, in terms of relative displacement with respect to the other one under the action of an external stimulus (P ; T), and where said relative displacement is likely to cause the relative displacement of two friction surfaces subjected to pressing forces so as to transform said external stimulus into a friction force and to thus control the displacement of said movable, or potentially movable, organ, and where said pressing forces are produced by pre-stressing means (17 ; 33 ; 86), and wherein said organs (1, 15 ; 20, 4 ; 5, 8) are designed capable of acting on the effects of the pre-stressing means (17 ; 36 ; 86) so as to use the resulting effect of the relative displacement of said movable, or potentially movable, organ in order to reduce said pressing forces; and wherein said friction device is designed so that the displacement of the movable organ in the direction of the external stimulus (P ; T) generates a control of said displacement, while the displacement in the opposite direction leads to the blocking of the movement.

2. Friction device according to claim 1, wherein the pre-stressing means (17 ; 36 ; 86) consist of pressing means with adjustable intensity.

3. Friction device according to claim 1 or claim 2, wherein the organs (20, 4) are movable, or potentially movable, with respect to each other in a rotation motion and are associated with means (41) for transforming a rotation motion into a rectilinear movement, while an annular element (3) is intercalated between said organs (20, 4) and said annular element is:
- capable of being blocked in rotation on one (20) of said organs, at least in one direction of rotation, so as to generate a friction torque between said annular element and the other organ (4),
- associated with elastic pre-stressing means (36) capable of increasing said friction torque,
- and associated with means (25, 26, 39) capable, under the effect of, on the one hand, the rotation of the movable organ (4) generated by the external force and, on the other hand, the resisting force resulting from the friction, of reducing the effects of said elastic pre-stressing means (36).

4. Friction device according to claim 3, wherein the annular element (3) is formed of a coaxial assembly of two rings (30), each having a friction surface (32) and shaped so that the modification of the distance separating them, obtained under the action of the elastic pre-stressing means (36), acts on the nearing of the friction surfaces (32) of said rings (30) to those (45, 46) of the movable organ (4).

5. Friction device according to claim 4, wherein the friction surface (32) of each of the rings (30) is coaxially truncated, while the friction surface (45, 46) in front of the movable organ (4) is also coaxially truncated and according to the same angle.

6. Friction device according to any one of the claims 4 to 5, wherein the device includes a ring (21) blocked in rotation, at least in one direction of rotation, on the immobilized organ (20), and which the annular element (3) is made integral in rotation with through balls (26) accommodated in cavities (25) uniformly distributed at the periphery and each formed by the coincidence of two recesses, one (24) provided for in said ring (21) and the other one (38) in said annular element, half in each of the rings forming same, the recess provided for in said annular element (3) being shaped in the form of ramps (39) so that, during a relative rotation motion of said annular element (3) with respect to said ring (21), said balls (26) rest against said ramps (39) so as to cause the separation of said rings (30).

7. Friction device according to any one of the claims 4 to 6, wherein the annular element (3) is connected to one of the organs (20) through a free wheel (22).

8. Friction device according to any one of the claims 5 to 7, wherein the rings (30) each have a truncated outer wall (32) so as to confer to the annular element (3), by nearing said rings (30) to each other, a substantially twin-wheel shape, while the movable organ (4) is in the form of a pulley mounted on said annular element (3) and the internal wall (45, 46) of which, which forms a friction surface aimed at co-operating with the external wall (32) of said annular element (3) forming the other friction surface, has a complementary shape and includes to this end a peripheral median ridge (44) separating it into two parts, each having a truncated shape, and oriented divergently, and wherein on said pulley (4) is fixed and wound a means (41) capable of being submitted to the external force.

9. Friction device according to claim 1 or claim 2, wherein the organs (5, 8) are movable with respect to each other in a rectilinear translation movement, and include means (50, 51, 60, 71) for transforming said rectilinear movement into two rotation movements coaxial to said translation movement and in opposite directions, so as to drive into reversed rotations friction surfaces (62, 72) brought into contact through pressing means (86).

10. Friction device according to claim 9, wherein one of the organs consists of a rod (5) provided with a threaded portion with several left-hand threads (50), and with a threaded portion with several right-hand threads (51), onto which two nuts (6, 7) are screwed, one of them with a left-hand thread and the other one with a right-hand thread, each of them being associated with at least one friction surface (62, 72).

11. Friction device according to claim 10, wherein the device includes a pile of annular shaped discs (62, 72) inserted onto the rod (5), each of them being connected in rotation alternately to one of the nuts (6, 7).

12. Friction device according to claim 11, wherein the two nuts (6, 7) and their discs (62, 72) are accommodated in a body (8) that contains the pressing means (86), which consist of elastic means (87) capable of exerting a pressing force on the pile of discs (62, 72).

13. Friction device according to any one of the claims 10 to 12, wherein one of the nuts (6, 7) is mounted in series with a free wheel.

14. Friction device according to any one of the preceding claims, wherein the pre-stressing means consist of hydraulic, pneumatic or electric actuators.

15. Friction damper, wherein it includes a friction device according to any one of claims 1, 2, 3, 4, 5, 6, 7, 8 or 14.

16. Friction damper, wherein it includes a friction device according to any one of claims 1, 2, 9, 10, 11, 12, 13 or 14.
